# EUROPEAN PATENT APPLICATION

(11) **EP 4 274 125 A1**
(43) Date of publication of application: **08.11.2023**
(21) Application number: 20967630.3
(22) Date of filing: 30.12.2020
(51) Int. Cl.: H04L 1/00

(54) **PARAMETER DETERMINATION METHOD, PARAMETER DETERMINATION APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2020/141778
(87) International publication number: WO 2022/141290

(57) **Abstract**

A parameter determination method, a parameter determination apparatus, and a storage medium are provided. The parameter determination method includes: determining a first search space, where a maximum Control Channel Element (CCE) aggregation level included in the first search space is higher than a first aggregation level threshold. Through this disclosure, a higher CCE aggregation level can be determined, so as to achieve a better coverage enhancement effect on broadcast Physical Downlink Control Channel (PDCCH).

## Description

### TECHNICAL FIELD

The present disclosure relates to the field of wireless communication technology, and in particular, to a parameter determination method, a parameter determination apparatus, and a storage medium.

### BACKGROUND

In a wireless communication system, Machine Type Communication (MTC) and Narrow Band Internet of Things (NB-IoT) technologies have been proposed for a low rate, high latency, and other scenarios in IoT services.

Due to the development of IoT services, MTC and NB-IoT technologies have been unable to meet requirements of current IoT services for a rate and latency. Therefore, a new terminal, Reduced capability (Redcap) user equipment (UE), or NR-lite for short, is designed to meet the requirements of the IoT services. Due to low cost and complexity requirements of Redcap UE, as well as reduction in an antenna number and a bandwidth, coverage of the terminal is decreased, and coverage enhancement is needed. However, Control Channel Element (CCE) aggregation levels in the related art cannot meet the requirement for coverage enhancement.

### SUMMARY

In order to overcome the problems existing in the related art, a parameter determination method, a parameter determination apparatus, and a storage medium are provided.

According to a first aspect of the present disclosure, a parameter determination method is provided. The method includes:
determining a first search space, where a maximum Control Channel Element (CCE) aggregation level included in the first search space is higher than a first aggregation level threshold.

In an embodiment, the first search space corresponds to a first type of terminals, the first aggregation level threshold is determined based on a maximum CCE aggregation level included in a second search space, and the second search space corresponds to a second type of terminals, where a reception capability of the first type of terminals is lower than a reception capability of the second type of terminals.

In an embodiment, each CCE aggregation level in the first search space corresponds to a candidate transmission position number, and a sum of candidate transmission position numbers in the first search space is the same as a sum of candidate transmission position numbers in the second search space.

In an embodiment, the candidate transmission position number in the first search space is smaller than a second aggregation level threshold.

In an embodiment, the second aggregation level threshold is determined based on a largest candidate transmission position number in the second search space.

In an embodiment, the first search space corresponds to a first control resource set, the second search space corresponds to a second control resource set, the first control resource set is configured based on preset parameters in a first table, and the second control resource set is configured based on preset parameters in a second table, where the preset parameters included in the first table are different from the preset parameters included in the second table.

In an embodiment, the preset parameters in the first table include first time domain parameters, and the first time domain parameters include time domain symbol numbers occupied by the first control resource set; the preset parameters in the second table include second time domain parameters, and the second time domain parameters include time domain symbol numbers occupied by the second control resource set, where at least one time domain symbol number included in the first time domain parameters is larger than a maximum time domain symbol number included in the second time domain parameters.

In an embodiment, the preset parameters in the first table and the preset parameters in the second table further include frequency domain resource number parameters;
where the preset parameters in the first table include first combination configurations of the time domain symbol numbers and the frequency domain resource number parameters, and the preset parameters in the second table include second combination configurations of the time domain symbol numbers and the frequency domain resource number parameters, where the first combination configurations are different from the second combination configurations.

In an embodiment, different first combination configurations correspond to different first control resource set capacities; when a first control resource set capacity is smaller than a third aggregation level threshold, a first combination configuration number is smaller than a second combination configuration number.

In an embodiment, the first search space is a type 0 Common Search Space (type 0 CSS).

According to a second aspect of the present disclosure, a parameter determination apparatus is provided. The apparatus includes:
a determination module, configured to determine a first search space, where a maximum Control Channel Element (CCE) aggregation level included in the first search space is higher than a first aggregation level threshold.

In an embodiment, the first search space corresponds to a first type of terminals, the first aggregation level threshold is determined based on a maximum CCE aggregation level included in a second search space, and the second search space corresponds to a second type of terminals,
where a reception capability of the first type of terminals is lower than a reception capability of the second type of terminals.

In an embodiment, each CCE aggregation level in the first search space corresponds to a candidate transmission position number, and a sum of candidate transmission position numbers in the first search space is the same as a sum of candidate transmission position numbers in the second search space.

In an embodiment, the candidate transmission position number in the first search space is smaller than a second aggregation level threshold.

In an embodiment, the second aggregation level threshold is determined based on a largest candidate transmission position number in the second search space.

In an embodiment, the first search space corresponds to a first control resource set, the second search space corresponds to a second control resource set, the first control resource set is configured based on preset parameters in a first table, and the second control resource set is configured based on preset parameters in a second table. The preset parameters included in the first table are different from the preset parameters included in the second table.

In an embodiment, the preset parameters in the first table include first time domain parameters, and the first time domain parameters include time domain symbol numbers occupied by the first control resource set; the preset parameters in the second table include second time domain parameters, and the second time domain parameters include time domain symbol numbers occupied by the second control resource set. At least one time domain symbol number included in the first time domain parameters is larger than a maximum time domain symbol number included in the second time domain parameters.

In an embodiment, the preset parameters in the first table and the preset parameters in the second table further include frequency domain resource number parameters;
where the preset parameters in the first table include first combination configurations of the time domain symbol numbers and the frequency domain resource number parameters, and the preset parameters in the second table include second combination configurations of the time domain symbol numbers and the frequency domain resource number parameters. The first combination configurations are different from the second combination configurations.

In an embodiment, different first combination configurations correspond to different first control resource set capacities; when a first control resource set capacity is smaller than a third aggregation level threshold, a first combination configuration number is smaller than a second combination configuration number.

In an embodiment, the first search space is a type 0 Common Search Space (type 0 CSS).

According to a third aspect of the present disclosure, a parameter determination apparatus is provided. The apparatus includes:
a processor; and a memory for storing processor executable instructions, where the processor is configured to implement the parameter determination method according to the first aspect or according to any one of the embodiments in the first aspect.

According to a fourth aspect of the present disclosure, a non-transitory computer readable storage medium is provided, where, when instructions in the storage medium are executed by a processor of a mobile terminal, the mobile terminal is caused to implement the parameter determination method according to the first aspect or according to any one of the embodiments in the first aspect.

The technical solutions provided in the embodiments of the present disclosure can include the following advantageous effects: by extending or enhancing the first search space according to the present disclosure, a higher CCE aggregation level can be determined, so as to achieve a better coverage enhancement effect on broadcast Physical Downlink Control Channel (PDCCH).

It should be understood that the above general description and the following detailed description are only exemplary and explanatory, but cannot limit the present disclosure.

### BRIEF DESCRIPTION OF THE DRAWINGS

The accompanying drawings, which are incorporated in and constitute a part of this specification, illustrate examples consistent with the present disclosure and, together with the description, serve to explain the principle of the disclosure.
FIG. 1 is a schematic diagram illustrating a communication system architecture among a network device and terminals according to an embodiment.
FIG. 2 is a flowchart illustrating a parameter determination method according to an embodiment.
FIG. 3 is a block diagram illustrating a parameter determination apparatus according to an embodiment.
FIG. 4 is a block diagram illustrating an apparatus for parameter determination according to an embodiment.
FIG. 5 is a block diagram illustrating an apparatus for parameter determination according to an embodiment.

### DETAILED DESCRIPTION OF THE EMBODIMENTS

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

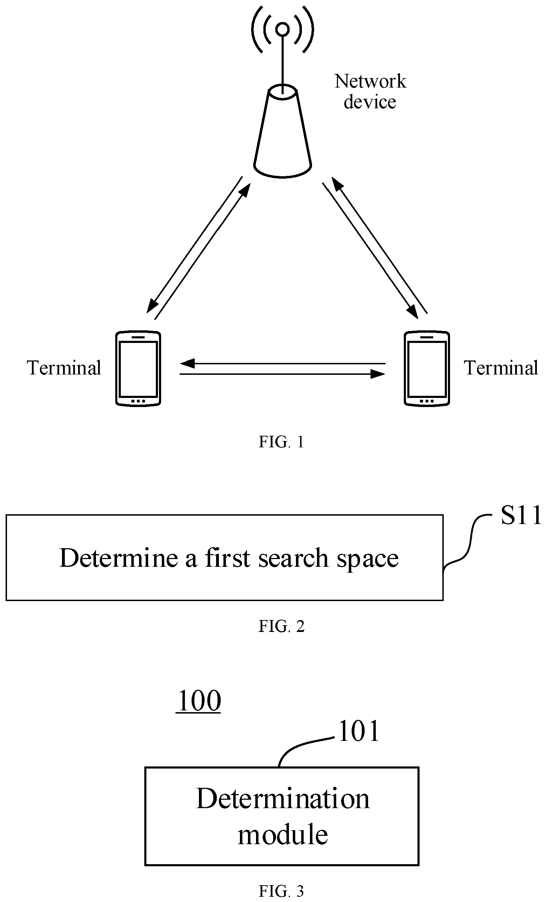

FIG. 1 is a schematic diagram illustrating a communication system architecture among a network device and terminals according to an embodiment. A communication method provided in this disclosure may be applied to the communication system architecture diagram shown in FIG. 1. As shown in FIG. 1, the network side device may send signaling based on the architecture shown in FIG. 1.

It can be understood that a communication system among the network device and the terminals shown in FIG. 1 is only illustrative, and the wireless communication system may further include other network devices, such as a core network device, a wireless relay device, and a wireless return device, which are not drawn in FIG. 1. A number of network devices and a number of terminals included in the wireless communication system are not limited in the embodiments of the present disclosure.

It can be further understood that the wireless communication system in the embodiments of the present disclosure is a network that provides wireless communication functions. The wireless communication system may adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), and Carrier Sense Multiple Access with Collision Avoidance. According to factors such as capacities, rates and latency of different networks, the networks may be classified into a 2G (generation) network, a 3G network, a 4G network and evolved networks in future, for example, a 5G network, which may be referred to as New Radio (NR). For convenience of description, a wireless communication network may be referred to as a network in this disclosure.

Further, network devices involved in the present disclosure may be referred to as wireless access network devices. The wireless access network devices may be: a base station, an evolved node base station (evolved node B), a home node B, an access point (AP) in a Wireless Fidelity (WIFI) system, a wireless relay node, a wireless return node, a Transmission Point (TP), a Transmission and Reception Point (TRP), etc., and may further be gNB in an NR system, or be components or a part of equipment that constitute a base station. In a Vehicle-to-Everything (V2X) communication system, the network devices may be on-board devices. It should be understood that specific technologies and device forms used for the network devices are not limited in the embodiments of the present disclosure.

Further, terminals involved in the present disclosure may be referred to as terminal devices, User Equipment (UE), Mobile Stations (MSs), Mobile Terminals (MTs), etc., and are devices that provide voice and/or data connectivity to users. For example, the terminals may be handheld devices, on-board devices, etc. with a wireless connection function. Currently, examples of some terminals are: Mobile Phones, Pocket Personal Computers (PPCs), handheld computers, Personal Digital Assistants (PDAs), notebook computers, tablet computers, wearable devices, on-board devices, etc. In addition, in a Vehicle-to-Everything (V2X) communication system, the terminal devices may be on-board devices. It should be understood that specific technologies and device forms used for the terminals are not limited in the embodiments of the present disclosure.

Reduced capability LTE has proposed two major technologies, MTC and NB-IoT, in communication systems, for example, an LTE (Long Term Evolution) 4G (Fourth Generation of Mobile Communication Technology) system, in order to support IoT services. The two technologies are mainly aimed at a low rate, high latency, and other scenarios, such as meter reading and environment monitoring. The NB-IoT technology currently supports a maximum transmission rate of hundreds of kbps (kilobits per second), while the MTC technology currently supports a maximum transmission rate of several Mbps (megabits per second). However, with the continuous development of IoT services, for example, the popularization of video surveillance, smart home, wearable devices, industrial sensor monitoring and other services, these services typically require a transmission rate ranging from tens of Mbps to 100 Mbps. In addition, these services have relatively high requirements for latency. Therefore, it is difficult for the MTC technology and the NB-IoT technology in LTE to meet the requirements of the services. Based on this situation, it has been proposed to design a new LTE in 5G NR to meet the requirements of mid-end IoT devices. In the current 3GPP (Third Generation of Partnership Project) standardization, this new terminal type is called Reduced capability LTE. Due to a reduction in capability or coverage of the Redcap terminal, coverage loss may occur. Therefore, coverage enhancement is needed. For example, in the Redcap terminal, broadcast Physical Downlink Control Channel (PDCCH) needs to be enhanced for simulation evaluation at 4GHz. Coverage enhancement for the broadcast PDCCH may be implemented through time domain repetition.

However, in the related art, CCE aggregation levels included in a standard definition of type 0 Common Search Space (type 0 CSS) are relatively low. If the time domain repetition is performed, the search space needs to be extended and enhanced.

For CCE aggregation levels included in the type 0 CSS in the related art and a candidate transmission position number included in each CCE aggregation level, reference may be made to Table 1.

**Table 1**

| CCE Aggregation Level | Number of Candidates |
|---|---|
| 4 | 4 |
| 8 | 2 |
| 16 | 1 |

It can be understood that each element in Table 1 exists independently, and these elements are illustratively listed in the same table, which does not mean that all elements in the table must exist simultaneously as shown in the table. A value of each element does not depend on a value of any other element in Table 1. Therefore, those skilled in the art can understand that the value of each element in Table 1 is an independent example.

Based on a parameter determination method provided in the embodiments of the present disclosure, configurations of a control resource set (CORESET # 0) are extended and higher CCE aggregation levels are introduced, so that the higher CCE aggregation levels can be supported in some configurations. For example, a PDCCH capacity of 32 CCEs is supported. Further, the probability of the Redcap terminal using the higher CCE aggregation levels can be increased.

FIG. 2 is a flowchart illustrating a parameter determination method according to an embodiment. As shown in FIG. 2, the method includes the following step S 11.

At step S11, a first search space is determined.

In the embodiments of the present disclosure, a maximum CCE aggregation level included in the first search space is higher than a first aggregation level threshold. The first search space corresponds to a first type of terminals. The first aggregation level threshold is determined based on a maximum CCE aggregation level included in a second search space. The second search space corresponds to a second type of terminals. A reception capability of the first type of terminals is lower than a reception capability of the second type of terminals.

In some embodiments of the present disclosure, taking the first type of terminals being a Redcap terminal as an example, the Redcap terminal includes one or two antennas and has a relatively weak reception capability. The second type of terminals is a general high-end terminal, and has a relatively high reception capability. As an example, the maximum CCE aggregation level included in the second search space corresponding to the second type of terminals may be 16, that is, the maximum CCE aggregation level may include 16 CCEs, so that the first aggregation level threshold may be 16. The embodiments of the present disclosure are only illustrative but are not specific limitation to this disclosure. It should be noted that the parameter determination method provided in this disclosure may be further applied to a network device, and the implementation of the method by the network device is similar to or the same as that by a terminal device, which will not be repeated here.

In the parameter determination method provided in the embodiments of the present disclosure, in order to enhance the probability of some terminals using a higher CCE aggregation level, it is determined to introduce the higher CCE aggregation level, so that the higher CCE aggregation level is supported in some configurations, and the coverage of broadcast PDCCH is more effectively enhanced.

In the embodiments of the present disclosure, the first search space may further include candidate transmission positions corresponding to each CCE aggregation level in the first search space. Candidate transmission position numbers corresponding to respective CCE aggregation levels may be different or the same, or candidate transmission position numbers corresponding to some CCE aggregation levels may be the same. Moreover, a sum of the candidate transmission position numbers corresponding to respective CCE aggregation levels is determined based on a PDCCH blind detection number. In other words, in response to determining the PDCCH blind detection number, the sum of the candidate transmission position numbers is determined. A sum of candidate transmission position numbers included in the first search space is the same as that correspondingly included in the second search space.

In the embodiments of the present disclosure, the candidate transmission position number in the first search space is smaller than a second aggregation level threshold. Further, a maximum candidate transmission position number corresponding to each CCE aggregation level in the first search space is smaller than the second aggregation level threshold.

In some embodiments of the present disclosure, the second aggregation level threshold may be determined based on a largest candidate transmission position number in the second search space.

As an example, if a largest candidate transmission position number corresponding to a CCE aggregation level in the second search space corresponding to the second type of terminals includes 4 candidate transmission positions, a maximum candidate transmission position number corresponding to each CCE aggregation level in the first search space corresponding to the first type of terminals is smaller than 4. For example, a largest candidate transmission position number included in the first search space may be 2 candidate transmission positions. Further, for the candidate transmission position number corresponding to each CCE aggregation level in the first search space, reference may be made to Table 1. As shown in Table 1, in the first search space, a CCE aggregation level including 4 CCEs corresponds to 2 candidate transmission positions, a CCE aggregation level including 8 CCEs corresponds to 2 candidate transmission positions, a CCE aggregation level including 16 CCEs corresponds to 2 candidate transmission positions, and a CCE aggregation level including 32 CCEs corresponds to 1 candidate transmission position.

**Table 2**

| CCE Aggregation Level | Number of Candidates |
|---|---|
| 4 | 2 |
| 8 | 2 |
| 16 | 2 |
| 32 | 1 |

It can be understood that each element in Table 2 exists independently, and these elements are illustratively listed in the same table, which does not mean that all elements in the table must exist simultaneously as shown in the table. A value of each element does not depend on a value of any other element in Table 2. Therefore, those skilled in the art can understand that the value of each element in Table 2 is an independent example. The tables provided in the embodiments of the present disclosure are only illustrative but are not specific limitations to this disclosure.

In the embodiments of the present disclosure, the first search space corresponds to a first control resource set, the second search space corresponds to a second control resource set, the first control resource set is configured based on preset parameters in a first table, and the second control resource set is configured based on preset parameters in a second table. The preset parameters included in the first table are different from the preset parameters included in the second table.

In the embodiments of the present disclosure, the preset parameters in the first table include first time domain parameters, and the first time domain parameters include time domain symbol numbers occupied by the first control resource set; the preset parameters in the second table include second time domain parameters, and the second time domain parameters include time domain symbol numbers occupied by the second control resource set. At least one time domain symbol number included in the first time domain parameters is larger than a maximum time domain symbol number included in the second time domain parameters.

As an example, if a maximum time domain symbol number occupied by the second control resource set corresponding to a time domain position of the second search space corresponding to the second type of terminals is 3 OFDM symbols, time domain symbol numbers occupied by the first control resource set corresponding to a time domain position of the first search space corresponding to the first type of terminals include at least one time domain symbol number, which is larger than 3 OFDM symbols. For example, the first control resource set includes at least one occupied time domain symbol number, which may be 4 OFDM symbols, or a time domain symbol number occupied by the first control resource set may be 6 OFDM symbols, or the like, which is not specifically limited here.

In some embodiments of the present disclosure, the preset parameters in the first table and the preset parameters in the second table further include frequency domain resource number parameters. The preset parameters in the first table include first combination configurations of the time domain symbol numbers and the frequency domain resource number parameters, and the preset parameters in the second table include second combination configurations of the time domain symbol numbers and the frequency domain resource number parameters. The first combination configurations are different from the second combination configurations. Referring to Tables 3 and 4, Table 3 corresponds to the first table, and Table 4 corresponds to the second table. As shown in Tables 3 and 4, a multiplexing pattern of a Synchronization Signal and PBCH Block (SSB) and the first control resource set, as well as an offset from an SSB reference point, are included in Tables 3 and 4. The same frequency domain resource number may correspond to different time domain symbol numbers to obtain different first combination configurations and different second combination configurations, the different first combination configurations correspond to different first control resource set capacities, and the different second combination configurations correspond to different second control resource set capacities. When a first control resource set capacity is smaller than a third aggregation level threshold, a first combination configuration number is smaller than a second combination configuration number.

**Table 3**

| Index | SS/ PBCH block and CORESET multiplexing pattern | Number of RBs | Number of Symbols | Offset (RBs) |
|---|---|---|---|---|
| 0 | 1 | 24 | 2 | 0 |
| 1 | 1 | 24 | 4 | 0 |
| 2 | 1 | 24 | 6 | 0 |
| 3 | 1 | 24 | 3 | 0 |
| 4 | 1 | 24 | 3 | 2 |
| 5 | 1 | 24 | 3 | 1 |
| 6 | 1 | 48 | 1 | 12 |
| 7 | 1 | 48 | 4 | 16 |
| 8 | 1 | 48 | 4 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

It can be understood that each element in Table 3 exists independently, and these elements are illustratively listed in the same table, which does not mean that all elements in the table must exist simultaneously as shown in the table. A value of each element does not depend on a value of any other element in Table 3. Therefore, those skilled in the art can understand that the value of each element in Table 3 is an independent example. The tables provided in the embodiments of the present disclosure are only illustrative but are not specific limitation to this disclosure.

**Table 4**

| Index | SS/ PBCH block and CORESET multiplexing pattern | Number of RBs | Number of Symbols | Offset (RBs) |
|---|---|---|---|---|
| 0 | 1 | 24 | 2 | 0 |
| 1 | 1 | 24 | 2 | 0 |
| 2 | 1 | 24 | 2 | 0 |
| 3 | 1 | 24 | 3 | 0 |
| 4 | 1 | 24 | 3 | 2 |
| 5 | 1 | 24 | 3 | 1 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

It can be understood that each element in Table 4 exists independently, and these elements are illustratively listed in the same table, which does not mean that all elements in the table must exist simultaneously as shown in the table. A value of each element does not depend on a value of any other element in Table 4. Therefore, those skilled in the art can understand that the value of each element in Table 4 is an independent example.

In the embodiments of the present disclosure, the first search space may be a time domain extension performed on a structure of a type 0 Common Search Space (type 0 CSS).

Taking Tables 2, 3 and 4 as examples, in some embodiments of the present disclosure, a new CCE aggregation level is added to the existing type 0 CSS, and the new CCE aggregation level ≥ 16. Still taking Tables 2, 3 and 4 as examples, the new CCE aggregation level, which ≥ 16, is added to a first configuration parameter set provided in some embodiments of the present disclosure, as compared to a parameter set shown in Table 1 in the related art. However, a sum of PDCCH blind detection numbers is the same as a sum of PDCCH blind detection numbers in the related art. Further taking Tables 2, 3 and 4 as examples, in a first configuration parameter set provided in some embodiments of the present disclosure, a candidate transmission position number corresponding to PDCCH with a lower CCE aggregation level is smaller than that in the existing parameter set type 0 CSS.

A duration of CORESET # 0 is added to the first configuration parameter set provided in some embodiments of the present disclosure for time domain extension, as compared to a parameter set in the related art; CORESET # 0 is allowed to be continuously larger than 3 OFDM symbols in time domain. Due to the fact that SSB in the related art does not support configurations with more than 3 OFDM symbols in configurations of CORESET # 0, instructions for SSB need to be enhanced. That is to say, the configurations of CORESET # 0 in the related art are based on a preset table, and the table includes a multiplexing pattern of SSB and CORESET # 0, a number of RBs corresponding to CORESET # 0, a number of symbols that CORESET # 0 lasts for, and an offset from an SSB reference point. However, a value range of CORESET # 0 in the related art is 1-3. In some embodiments of the present disclosure, a part of configurations is removed from a configuration table of the related art, and then some configurations including more than 3 OFDM symbols are added. For details, reference may be made to Table 4.

Any one of the parameter determination method embodiments of the present disclosure may be applied to a terminal, a base station, and a network side device, which will not be limited in the embodiments of the present disclosure.

It should be noted that Tables 2, 3, and 4 in the embodiments of the present disclosure are different examples that may be adopted respectively, which will not be limited in the embodiments of the present disclosure.

Based on the same concept, in the embodiments of the present disclosure, a parameter determination apparatus is further provided. Any one of the parameter determination apparatus embodiments of the present disclosure may be applied to a terminal, a base station, and a network side device, which will not be limited in the embodiments of the present disclosure.

It can be understood that, in order to achieve the above functions, the parameter determination apparatus provided in the embodiments of the present disclosure includes corresponding hardware structures and/or software modules for the execution of the functions. With reference to units and algorithm steps in each example disclosed in the embodiments of the present disclosure, the embodiments of the present disclosure may be implemented in the form of hardware or a combination of hardware and computer software. Whether a function is executed by hardware or by computer software driving hardware depends on the specific applications and design constraints of the technical solutions. Those skilled in the art may use different methods to implement the described functions for respective specific applications, but such implementation should not be considered to go beyond the scope of the technical solutions of the embodiments of the present disclosure.

FIG. 3 is a block diagram illustrating a parameter determination apparatus according to an embodiment. Referring to FIG. 3, the parameter determination apparatus 100 includes a determination module 101.

The determination module 101 is configured to determine a first search space, where a maximum Control Channel Element (CCE) aggregation level included in the first search space is higher than a first aggregation level threshold.

In the embodiments of the present disclosure, the first search space corresponds to a first type of terminals, the first aggregation level threshold is determined based on a maximum CCE aggregation level included in a second search space, and the second search space corresponds to a second type of terminals. A reception capability of the first type of terminals is lower than a reception capability of the second type of terminals.

In the embodiments of the present disclosure, each CCE aggregation level in the first search space corresponds to a candidate transmission position number, and a sum of candidate transmission position numbers in the first search space is the same as a sum of candidate transmission position numbers in the second search space.

In the embodiments of the present disclosure, the candidate transmission position number in the first search space is smaller than a second aggregation level threshold.

In the embodiments of the present disclosure, the second aggregation level threshold is determined based on a largest candidate transmission position number in the second search space.

In the embodiments of the present disclosure, the first search space corresponds to a first control resource set, the second search space corresponds to a second control resource set, the first control resource set is configured based on preset parameters in a first table, and the second control resource set is configured based on preset parameters in a second table. The preset parameters included in the first table are different from the preset parameters included in the second table.

In the embodiments of the present disclosure, the preset parameters in the first table include first time domain parameters, and the first time domain parameters include time domain symbol numbers occupied by the first control resource set; the preset parameters in the second table include second time domain parameters, and the second time domain parameters include time domain symbol numbers occupied by the second control resource set. At least one time domain symbol number included in the first time domain parameters is larger than a maximum time domain symbol number included in the second time domain parameters.

In the embodiments of the present disclosure, the preset parameters in the first table and the preset parameters in the second table further include frequency domain resource number parameters,
where the preset parameters in the first table include first combination configurations of the time domain symbol numbers and the frequency domain resource number parameters, and the preset parameters in the second table, include second combination configurations of the time domain symbol numbers and the frequency domain resource number parameters. The first combination configurations are different from the second combination configurations.

In the embodiments of the present disclosure, different first combination configurations correspond to different first control resource set capacities; when a first control resource set capacity is smaller than a third aggregation level threshold, a first combination configuration number is smaller than a second combination configuration number.

In the embodiments of the present disclosure, the first search space is a type 0 Common Search Space (type 0 CSS).

Regarding the apparatus in the above embodiments, the specific manner in which each module performs operations has been described in detail in the embodiments of the relevant method, which can also be applied to this embodiment.

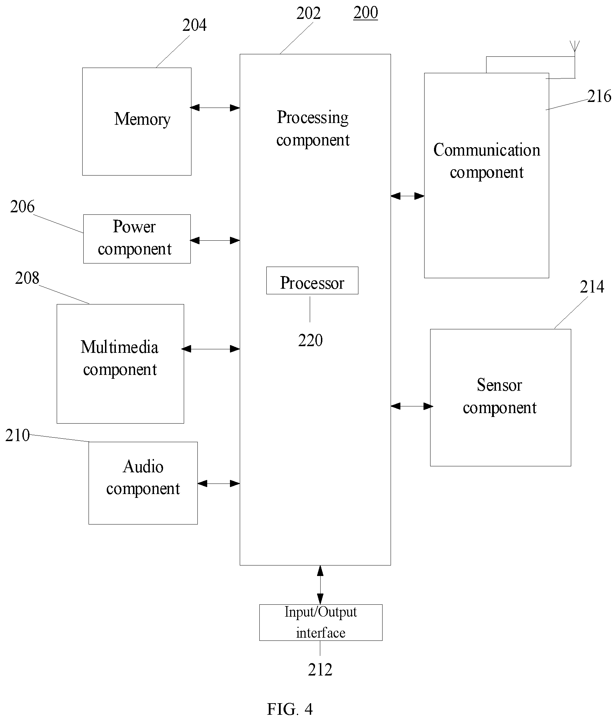

FIG. 4 is a block diagram illustrating an apparatus 200 for parameter determination according to an embodiment. For example, the apparatus 200 may be a mobile phone, a computer, a digital broadcast terminal, a messaging device, a game console, a tablet device, medical equipment, fitness equipment, a personal digital assistant, etc.

Referring to FIG. 4, the apparatus 200 may include one or more of the following components: a processing component 202, a memory 204, a power component 206, a multimedia component 208, an audio component 210, an input/output (I/O) interface 212, a sensor component 214, and a communication component 216.

The processing component 202 usually controls the overall operation of the apparatus 200, such as operations associated with display, telephone calls, data communications, camera operations, and recording operations. The processing component 202 may include one or more processors 220 to execute instructions to perform all or part of the steps in the methods described above. Moreover, the processing component 202 may include one or more modules to facilitate interaction between the processing component 202 and other components. For example, the processing component 202 may include a multimedia module to facilitate interaction between the multimedia component 208 and the processing component 202.

The memory 204 is configured to store various types of data to support operation at the apparatus 200. Examples of these data include instructions for any application or method operating at the apparatus 200, contact data, phone book data, messages, pictures, videos, and the like. The memory 204 may be implemented by any type of volatile or non-volatile storage device or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 206 provides power to various components of the apparatus 200. The power component 206 may include a power management system, one or more power sources, and other components associated with power generated, managed, and distributed for the apparatus 200.

The multimedia component 208 includes a screen that provides an output interface between the apparatus 200 and a user. In some examples, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense the boundary of touch or slide actions but also detect the duration and pressure associated with touch or slide operations. In some examples, the multimedia component 208 includes a front camera and/or a rear camera. When the apparatus 200 is in an operation mode, such as a shooting mode or a video mode, the front camera and/or the rear camera may receive external multimedia data. Each of the front and rear cameras may be a fixed optical lens system or have a focal length and an optical zoom capability.

The audio component 210 is configured to output and/or input audio signals. For example, the audio component 210 includes a microphone (MIC) configured to receive an external audio signal when the apparatus 200 is in an operation mode, such as a call mode, a recording mode, and a voice recognition mode. The received audio signal may be further stored in the memory 204 or transmitted via the communication component 216. In some examples, the audio component 210 also includes a loudspeaker for outputting an audio signal.

The I/O interface 212 provides an interface between the processing component 202 and a peripheral interface module which may be a keyboard, a click wheel, a button, or the like. These buttons may include, but are not limited to a home button, a volume button, a start button, and a lock button.

The sensor component 214 includes one or more sensors for providing a status assessment in various aspects to the apparatus 200. For example, the sensor component 214 may detect an open/closed state of the apparatus 200, and the relative positioning of components, for example, the component is a display and a keypad of the apparatus 200. The sensor component 214 may also detect a change in position of the apparatus 200 or a component of the apparatus 200, the presence or absence of a user in contact with the apparatus 200, the orientation or acceleration/deceleration of the apparatus 200 and a change in temperature of the apparatus 200. The sensor component 214 may include a proximity sensor configured to detect the presence of nearby objects without any physical contact. The sensor component 214 may also include a light sensor, such as a CMOS or CCD image sensor, for use in imaging applications. In some examples, the sensor component 214 may also include an acceleration sensor, a gyro sensor, a magnetic sensor, a pressure sensor, or a temperature sensor.

The communication component 216 is configured to facilitate wired or wireless communication between the apparatus 200 and other devices. The apparatus 200 may access a wireless network based on a communication standard, such as WiFi, 2G or 3G, or a combination thereof. In an example, the communication component 216 receives broadcast signals or broadcast associated information from an external broadcast management system via a broadcast channel. In an example, the communication component 216 also includes a near field communication (NFC) module to facilitate short range communication. For example, the NFC module may be implemented based on a radio frequency identification (RFID) technology, an infrared data association (IrDA) technology, an ultra wide band (UWB) technology, a Bluetooth (BT) technology, and other technologies.

In an example, the apparatus 200 may be implemented by one or more application specific integrated circuits (ASICs), digital signal processors (DSPs), digital signal processing devices (DSPDs), programmable logic devices (PLDs), a field programmable gate array (FPGA), a controller, a microcontroller, a microprocessor or other electronic elements for performing the above methods.

In an example, there is also provided a non-transitory computer readable storage medium including instructions, such as a memory 204 including instructions, where the instructions are executable by the processor 220 of the apparatus 200 to perform the method as described above. For example, the non-transitory computer readable storage medium may be a ROM, a random access memory (RAM), a CD-ROM, a magnetic tape, a floppy disk, and an optical data storage device.

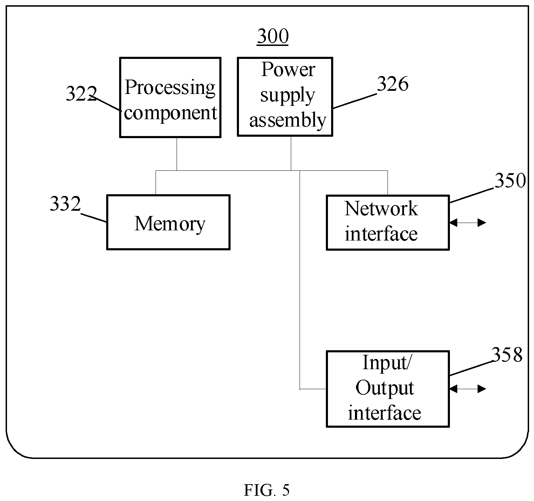

FIG. 5 is a block diagram illustrating an apparatus 300 for parameter determination according to an embodiment. For example, an apparatus 300 may be provided to a server. With reference to FIG. 5, the apparatus 300 includes a processing component 322, which includes one or more processors; and a memory resource represented by a memory 332 for storing instructions executable by the processing component 322, such as application programs. The application programs stored in the memory 332 may include one or more modules, each corresponding to a set of instructions. Furthermore, the processing component 322 is configured to execute the instructions to implement the parameter determination method.

The apparatus 300 may further include a power supply assembly 326 configured to perform power management on the apparatus 300; a wired or wireless network interface 350 configured to connect the apparatus 300 to a network; and an input/output (I/O) interface 358. The apparatus 300 may operate an operating system stored in the memory 332, such as Windows Server TM, Mac OS XTM, UnixTM, LinuxTM, or FreeBSDTM.

It can be further understood that "multiple" and "plurality" in the present disclosure refer to two or more, and other quantifiers are similar thereto. "And/or" describes association relationships of associated objects, indicating that three relationships may exist, for example, A and/or B may indicate three situations: A exists alone; both A and B exist; and B exists alone. The character "/" generally indicates that associated objects have a "or" relationship. Terms determined by "a," "the," and "said" in their singular forms are also intended to include their plural forms, unless clearly indicated otherwise in the context.

It can be further understood that the terms "first," "second," and the like are used to describe various information, but such information should not be limited to these terms. These terms are used only to distinguish one category of information from another, but do not indicate a particular order or importance. In fact, expressions such as "first" and "second" may be used interchangeably completely. For example, without departing from the scope of the present disclosure, first information may be referred as second information, and similarly, second information may be referred as first information.

It can be further understood that, in the embodiments of the present disclosure, although operations are described in a particular order in the drawings, this should not be understood as requiring these operations to be performed in a shown particular or sequential order, or requiring all shown operations to be performed, so as to achieve desired results. In particular environments, multi-task processing and parallel processing may be advantageous.

Other embodiments of the present disclosure will be readily apparent to those skilled in the art after considering the specification and practicing the invention disclosed herein. The present application is intended to cover any variations, uses, or adaptations of the present disclosure, which follow the general principle of the present disclosure and include common knowledge or conventional technical means in the art that are not disclosed in the present disclosure. The specification and embodiments are to be regarded as illustrative only. The true scope and spirit of the present disclosure are pointed out by the following claims.

It should be understood that the present disclosure is not limited to the precise structures that have described and shown in the drawings, and various modifications and changes can be made without departing from the scope thereof. The scope of the disclosure is to be limited only by the appended claims.

## Claims

1. A parameter determination method, comprising:
determining a first search space, wherein a maximum Control Channel Element, CCE, aggregation level comprised in the first search space is higher than a first aggregation level threshold.

2. The parameter determination method of claim 1, wherein the first search space corresponds to a first type of terminals, the first aggregation level threshold is determined based on a maximum CCE aggregation level comprised in a second search space, and the second search space corresponds to a second type of terminals,
wherein a reception capability of the first type of terminals is lower than a reception capability of the second type of terminals.

3. The parameter determination method of claim 1 or 2, wherein each CCE aggregation level in the first search space corresponds to a candidate transmission position number, and a sum of candidate transmission position numbers in the first search space is the same as a sum of candidate transmission position numbers in the second search space.

4. The parameter determination method of claim 3, wherein the candidate transmission position number in the first search space is smaller than a second aggregation level threshold.

5. The parameter determination method of claim 4, wherein the second aggregation level threshold is determined based on a largest candidate transmission position number in the second search space.

6. The parameter determination method of claim 1, wherein the first search space corresponds to a first control resource set, the second search space corresponds to a second control resource set, the first control resource set is configured based on preset parameters in a first table, and the second control resource set is configured based on preset parameters in a second table,
wherein the preset parameters comprised in the first table are different from the preset parameters comprised in the second table.

7. The parameter determination method of claim 6, wherein the preset parameters in the first table comprise first time domain parameters, and the first time domain parameters comprise time domain symbol numbers occupied by the first control resource set; the preset parameters in the second table comprise second time domain parameters, and the second time domain parameters comprise time domain symbol numbers occupied by the second control resource set,
wherein at least one time domain symbol number comprised in the first time domain parameters is larger than a maximum time domain symbol number comprised in the second time domain parameters.

8. The parameter determination method of claim 7, wherein the preset parameters in the first table and the preset parameters in the second table further comprise frequency domain resource number parameters;
the preset parameters in the first table comprise first combination configurations of the time domain symbol numbers and the frequency domain resource number parameters, and the preset parameters in the second table comprise second combination configurations of the time domain symbol numbers and the frequency domain resource number parameters,
wherein the first combination configurations are different from the second combination configurations.

9. The parameter determination method of claim 8, wherein different first combination configurations correspond to different first control resource set capacities; when a first control resource set capacity is smaller than a third aggregation level threshold, a first combination configuration number is smaller than a second combination configuration number.

10. The parameter determination method of any one of claims 1-9, wherein the first search space is a type 0 Common Search Space, type 0 CSS.

11. A parameter determination apparatus, comprising:
a determination module, configured to determine a first search space, wherein a maximum Control Channel Element, CCE, aggregation level comprised in the first search space is higher than a first aggregation level threshold.

12. A parameter determination apparatus, comprising:
a processor; and
a memory for storing processor executable instructions,
wherein the processor is configured to implement the parameter determination method of any one of claims 1-10.

13. A non-transitory computer readable storage medium, wherein, when instructions in the storage medium are executed by a processor of a mobile terminal, the mobile terminal is caused to implement the parameter determination method of any one of claims 1-10.
